# EUROPÄISCHE PATENTANMELDUNG

(11) **EP 2 276 150 A1**
(43) Veröffentlichungstag der Anmeldung: **19.01.2011**
(21) Anmeldenummer: 09009222.2
(22) Anmeldetag: 15.07.2009
(51) Int. Cl.: H02K 7/18, H02K 3/02, H02K 9/19, H02K 33/12

(54) **Elektromechanischer Antrieb zum Erzeugen einer translatorischen Bewegung**

(71) Anmelder: Frank, Gabriele, 71686 Remseck (DE)
(72) Erfinder: Pilz, Jens, 12305 Berlin (DE)
(74) Vertreter: Maser, Jochen

(57) **Zusammenfassung**

Die Erfindung betrifft einen elektromechanischen Antrieb sowie ein Verfahren zur Steuerung eines elektromechanischen Antriebs zur Erzeugung einer translatorischen Bewegung für ein Antriebselement (16), wobei die translatorische Bewegung durch eine magnetinduzierte Stellkraft erzeugt wird mit einer ersten Antriebseinrichtung (32), welche eine Spuleneinrichtung (33) aufweist, die auf das Antriebselement (16) die Stellkraft erzeugt, wobei das unmagnetische Antriebselement (16) mit magnetisch und elektrisch voneinander isolierten Einsätzen (35) versehen ist und mit zumindest einer zweiten Antriebseinrichtung (41), die getrennt zur ersten Antriebseinrichtung (32) und symmetrisch zur Achse (13) angeordnet ist und mindestens ein Stellglied (42) aufweist, welches mit dem Antriebselement (16) starr gekoppelt ist, wobei das Stellglied (42) ein oder mehrere Permanentmagnete aufweist, welche auf das Stellglied (42) durch ein oder mehrere magnetische Aktuatoren (47) eine weitere Stellkraft bewirken, wobei die zumindest eine weitere Antriebseinrichtung (41) zeitlich nach der ersten Antriebseinrichtung (32) aktivierbar ist. (Hierzu Figur 1)

## Beschreibung

Die Erfindung betrifft einen elektromechanischen Antrieb zur Erzeugung einer translatorischen Bewegung für ein Antriebselement, wobei die translatorische Bewegung des Antriebselementes durch eine magnetinduzierte Stellkraft erzeugt wird.

Aus der DE 42 17 357 A1 ist ein Linearmotor grundsätzlicher Art bekannt. Ein solcher Linearmotor weist eine einhäusige, gleichmäßig wirkende elektromagnetische Konstruktion auf, um eine Stellbewegung zu erzielen. Diese Stellbewegung wird beispielsweise in Werkzeugmaschinen zur Durchführung einer Stellbewegung eingesetzt. Der konstruktive Aufbau eines solchen Linearmotors ist aufwändig. Darüber hinaus ist ein flexibler Einsatz und eine Anpassung an unterschiedliche Kräfteverläufe innerhalb der Stellbewegung des Antriebselementes nicht möglich. Linearmotoren können grundsätzlich auch für einen Startvorgang, beispielsweise für kurbelwellenlose Brennkraftmaschinen, eingesetzt werden. Solch eine kurbelwellenlose Brennkraftmaschine ist beispielsweise aus der PS DE 33 20 363 A1 bekannt. Ebenso geht ein solcher Motor aus der PS US 6,971,340 B1 hervor. Bei solchen Motoren besteht jedoch dass Problem, dass ein Startvorgang bzw. ein Anlaufen eines solchen Verbrennungsmotors bisher schwierig und verschleißintensiv war. Aus diesem Grund heraus, wurde durch die PS US 6,971,340 B1 ein Kom-pressionsimpulsverfahren zum Anlassen eines solchen Freikolben-Verbrennungsmotors vorgeschlagen. Hierbei handelt es sich jedoch um eine sehr komplizierte Startmechanik. Dies ist einer der Gründe, warum sich solche Motoren nicht durchsetzen. Der Einsatz eines Linearmotors gemäß der DE 42 17 357 A1 wurde in der DE 44 17 135 A1 realisiert. Dabei entstand jedoch eine aufwändige Konstruktion, die in der Realität nicht wirtschaftlich umsetzbar ist. Zudem können einzelne Betriebssituationen nicht erreicht werden, da ein solcher Linearmotor die kurzzeitig erforderlichen Kräfte nicht aufbringen kann.

Der Erfindung liegt deshalb die Aufgabe zugrunde, einen elektromagnetischen Antrieb zu schaffen, der eine Stellbewegung bei einem anwachsenden Widerstand einer Stellbewegung erfordert, wie sie beispielsweise bei Pressen oder zum Anlassen von Freikolben-Verbrennungsmotoren einsetzbar ist.

Diese Aufgabe wird erfindungsgemäß durch einen elektromechanischen Antrieb gemäß den Merkmalen des Anspruchs 1 sowie einem Verfahren zur Steuerung des elektromechanischen Antriebs gemäß den Merkmalen des Anspruchs 12 gelöst. Weitere vorteilhafte Ausgestaltungen der Erfindung sind in den jeweils abhängigen Ansprüchen angegeben.

Der elektromechanische Antrieb weist eine erste Antriebseinrichtung auf, weiche eine Spuleneinrichtung umfasst, die eine erste magnetinduzierte Stellkraft im Antriebselement erzeugt und zumindest eine zweite oder weitere Antriebseinrichtung, die getrennt zur ersten Antriebseinrichtung vorgesehen ist, und ein mit dem Antriebselement starr gekoppeltes Stellglied mit einem oder mehreren Permanentmagneten, auf die durch ein oder mehrere magnetische Aktuatoren eine weitere Stellkraft erzeugt wird, wobei die zweite oder weitere Antriebseinrichtung zeitlich nach der ersten Antriebseinrichtung aktivierbar ist.

Diese erfindungsgemäße Ausgestaltung weist den Vorteil auf, dass auf das Antriebselement eine Stellbewegung erzeugt werden kann, welche gegen Ende der Stellbewegung eine anwachsende Beschleunigung erfährt und mit zunehmender Stellbewegung gegen einen anwachsenden Widerstand arbeiten kann, indem die zweite oder weitere Antriebseinrichtung zugeschalten wird. Dadurch können beispielsweise Pressen oder Hammerwerke oder dergleichen angetrieben werden. Des Weiteren eignet sich dieser elektromechanische Antrieb auch für einen Startvorgang von Freikolben-Verbrennungsmotoren, bei denen gegen Ende einer Hubbewegung für einen Zündvorgang eine erhöhte Stellkraft erforderlich ist, um insbesondere beim Startvorgang kalte Verbrennungsluft zu verdichten. Durch einen solchen elektromechanischen Antrieb, insbesondere bei Freikolbenmotoren, kann auf gesonderte Zündspulen verzichtet werden.

Nach einer bevorzugten Ausgestaltung der Erfindung ist vorgesehen, dass das Antriebselement der ersten Antriebseinrichtung aus einem nicht magnetischen Material, wie beispielsweise Keramik, hergestellt ist und zumindest einen magnetisch anziehbaren Einsatz umfasst, wobei vorzugsweise mehrere über den Umfang des Antriebselements verteilte magnetisch anziehbare Einsätze vorgesehen sind, die insbesondere elektrisch und magnetisch voneinander getrennt angeordnet sind. Dadurch kann in einfacher Weise ein Antriebselement ausgebildet werden, welches mit einem Spulenkörper zusammenwirkt und von diesem angetrieben wird. Dies ermöglicht eine kompakte Bauweise und einfache Einbindung der ersten Antriebseinrichtung an bestehende Strukturen, insbesondere bei Freikolben-Verbrennungsmotoren. Gleichzeitig kann dadurch ein rotationssymmetrisches Antriebselement vorgesehen sein, welches durch die magnetische und elektrische voneinander isolierte Anordnung die Bildung von Wirbelströmen vermeidet.

Des Weiteren ist bevorzugt vorgesehen, dass das Antriebselement mittels mindestens einem magnetisch anziehbaren Einsatz im Bereich der Spuleneinrichtung magnetisch aktivierbar ist. Dadurch kann in einfacher Weise und reibungsfrei eine Stellkraft auf das Antriebselement erzielt werden.

Eine weitere bevorzugte Ausgestaltung der Erfindung sieht vor, dass der oder die magnetisch anziehbaren Einsätze, insbesondere Permanentmagnete oder Eisenpakete, in dem Antriebselement formschlüssig vorgesehen sind. Dies ermöglicht, dass bei einem Einsatz in einem Verbrennungsmotor bei einer hohen Taktfrequenz des Verbrennungsmotors diese Einsätze sicher aufgenommen werden können. Bevorzugt sind Hinterschneidungen, wie beispielsweise schwalbeschwanzförmige oder T-nutenförmige Hinterschneidungen vorgesehen, um den magnetischen Einsatz darin zu fixieren.

Des Weiteren ist bevorzugt vorgesehen, dass das Antriebselement der ersten Antriebseinrichtung als Hubstange zwischen zwei Kolben eines Freikolben-Verbrennungsmotors ausgebildet ist und ein bis alle Spuleneinrichtungen einer bis aller Antriebseinrichtungen zur Erzeugung elektrischer Energie im Dauerbetrieb vorgesehen sind. Dies weist den Vorteil auf, dass die Antriebseinrichtung unmittelbar an der Hubstange angeordnet wird, wodurch eine kompakte Bauweise beim Einsatz in einem solchen Freikolben-Verbrennungsmotor gegeben ist. Bevorzugt weist auch die Anordnung der zumindest einen weiteren Antriebseinrichtung, welche unmittelbar mit der ersten Antriebseinrichtung bewegungsgekoppelt ist, den Vorteil auf, dass der mehrstufige elektromechanische Antrieb kompakt den Verbrennungs- und / oder Ansaugräumen zugeordnet ist. Dadurch können aufwändige Ansteuerungen über Gestängekurbeln und dergleichen ausbleiben. Vielmehr wird dadurch offensichtlich, dass die bislang komplizierte Startmechanik als auch verschleißintensive Startmechanik wesentlich vereinfacht und verschleißfrei ausgebildet wird. Darüber hinaus kann diese Anordnung gleichzeitig als Generator zur Erzeugung von elektrischer Energie eingesetzt werden.

Eine bevorzugte Ausführungsform sieht vor, dass ein oder mehrere Stellglieder symmetrisch zur Mitte gelegenen Bewegungs- und Symmetrieachse des Antriebselementes positioniert sind, wobei an beiden in Bewegungsrichtung weisenden Oberflächen des Grundkörpers ein oder mehrere verteilt angeordnete Permanentmagnete vorgesehen sind, auf deren Bewegungsachse im feststehenden Gehäuse gegenüberliegend zumindest ein magnetischer Aktuator vorgesehen ist. Dadurch kann aufgrund der symmetrischen Anordnung in beiden Bewegungsrichtungen eine entsprechend gleiche Kraft aufgebaut werden, um das Antriebselement in eine Hin- und Herbewegung überzuführen. Bevorzugt sind bei dieser Anordnung der Permanentmagnete Hinterschneidungen im Stellglied vorgesehen, welche die Permanentmagnete sicher aufnehmen und gleichzeitig eine sichere Kraftübertragung von den magnetischen Kräften über die Permanentmagnete auf das Stellglied ermöglichen.

Eine weitere bevorzugte Ausgestaltung der Erfindung sieht vor, dass das Stellglied in einem Gehäuseabschnitt des Freikolben-Verbrennungsmotors verdrehgesichert geführt ist. Diese besondere Ausgestaltung ermöglicht, dass eine exakte Positionierung der Permanentmagnete zu den Spuleneinrichtungen, die im Gehäuse des Freikolben-Verbrennungsmotors gehalten und dem Permanentmagneten zugeordnet sind, eingehalten wird. Somit erfolgt lediglich eine Hin- und Herbewegung entlang der Längsachse des Antriebselementes. Alternativ kann vorgesehen sein, dass die Antriebseinrichtungen und die Kolben sich um die Längsachse des Antriebselementes zusätzlich zur Hin- und Herbewegung auch drehen können. Dies ermöglicht zusätzlich zu einem Bewegungsantrieb auch einen Generatorbetrieb zur Energieerzeugung.

Die zumindest eine weitere Antriebseinrichtung weist bevorzugt ein Stellglied auf, welches scheibenförmig ausgebildet ist und einen Grundkörper aufweist, der koaxial zum Antriebselement positioniert ist, wobei außerhalb des Antriebselementes am Außenumfang des Grundkörpers ein oder mehrere, vorzugsweise gleichmäßig über den Umfang verteilt angeordnete Permanentmagnete vorgesehen sind. Dadurch wird ermöglicht, dass zusätzlich zur ersten Antriebseinrichtung eine in gleicher Wirkrichtung agierende Stellkraft durch die zumindest eine weitere Antriebseinrichtung erzeugt wird. Um eine besonders hohe Stellkraft zu erzielen, sind über den Außenumfang am Grundkörper des Stellgliedes mehrere Permanentmagnete angeordnet, wodurch die Stellkraft durch die Summe der Anzahl der Permanentmagnet-Aktuatorpaare bestimmt und erhöht werden kann.

Nach einer weiteren bevorzugten Ausgestaltung der Erfindung ist vorgesehen, dass an einem dem Stellglied der zweiten oder weiteren Antriebseinrichtung zugeordneten Gehäuseabschnitt oder Halterung, insbesondere einer Ringfläche des Stellgliedes zugeordneten Gehäuseabschnitts und dem am Stellglied angeordneten Permanentmagnet gegenüberliegend, ein magnetischer Aktuator vorgesehen ist. Bevorzugt sind diese Einheiten symmetrisch über den Umfang verteilt vorgesehen, so dass eine in der Achse des Antriebselementes wirkende Gesamtkraft durch die erste und zweite Antriebseinrichtung erzeugt wird. Durch einen solchen elektromagnetischen Antrieb kann durch eine erste Ansteuerung erzielt werden, dass die erste und zweite Antriebseinrichtung in gleicher Richtung eine Antriebskraft auf das Antriebselement erzeugen. Ebenso kann beispielsweise bei einem Antriebselement vorgesehen sein, welches Teil einer Hub- oder Schubstange eines Freikolbenmotors ist und welches ein Kolbenpaar aufnimmt, dass eine erste Antriebseinrichtung eine Stellkraft in die eine Richtung und die zweite Antriebseinrichtung eine Stellkraft zunächst in die gleiche Richtung bewirkt, um eine besondere Beschleunigungsphase oder Kraftphase einzuleiten, wobei unmittelbar vor einer Hubendbewegung beispielsweise eine Umpolung der zweiten Antriebseinheit erfolgen kann, wodurch auch eine Abbremswirkung eingeleitet werden kann.

Der magnetische Aktuator ist bevorzugt als Eisenkern, insbesondere ferromagnetischer Kern, mit einer stromdurchflossenen Spule ausgebildet. Bei mehreren dem Stellglied zugeordneten magnetischen Aktuatoren ist bevorzugt eine gemeinsame Ansteuerung durch eine Steuereinrichtung vorgesehen. Alternativ kann auch vorgesehen sein, dass nach und nach mehrere magnetische Aktuatoren bestromt werden, um eine anwachsende Stellkraft zu erzielen.

Eine weitere bevorzugte Ausgestaltung der Erfindung sieht vor, dass die Spuleneinrichtung aus einem oder mehreren Elektromagneten besteht und eine oder mehrere Leitungen eines jeden Elektromagneten mit einem elastischen, nicht leitenden Material berührt oder umhüllt ist und dass die Leitungen des oder der Elektromagneten in einem Spulengehäuse angeordnet sind und das Spulengehäuse mit einer Kühlflüssigkeit beaufschlagbar ist. Diese Anordnung weist insbesondere im Generator-betrieb den Vorteil auf, dass eine Kühlung der Spuleneinrichtung aufgrund des flüssigkeitsdichten Spulengehäuses ermöglicht ist und somit eine verbesserte Leistung erzielt wird. Insbesondere nach einer Startphase, bei dem ein Dauerbetrieb des elektromechanischen Antriebs als Generator vorgesehen ist, um die erzeugte Energie abzuführen oder zu speichern, können thermisch stabile Verhältnisse geschaffen werden.

Eine alternative Ausgestaltung der Spuleneinrichtung sieht vor, dass die Spuleneinrichtung aus einem oder mehreren Elektromagneten mit einer oder mehreren elektrischen Leitungen besteht und dass zwischen einzelnen Windungen der elektrischen Leitungen oder Lagen der elektrischen Leitungen Kühlschläuche und/oder Kühlelemente vorgesehen sind. Dadurch kann eine wahlweise Anordnung von elektrischen Leitungen und Kühlschläuchen vorgesehen sein, um insbesondere im Generatorbetrieb eine gute und gleichmäßige Kühlung zu erzielen. Bevorzugt ist vorgesehen, dass eine oder mehrere Lagen von elektrischen Leitungen vorgesehen sind und anschließend eine Lage von Kühlschläuchen aufgebracht wird, bevor weitere Lagen von Leitungen folgen. Bevorzugt ist das Verhältnis von elektrischen Leitungen zu Kühlschläuchen 2 : 1. Dadurch kann eine gleichmäßige Kühlung gegeben sein.

Eine weitere bevorzugte Ausgestaltung der Spuleneinrichtung sieht vor, dass zur Kühlung der Spuleneinrichtung im Generatorbetrieb eine Kühlflüssigkeit eingesetzt wird, welche Partikel aus PCM (phase change material) umfassen. Hierbei handelt es sich um Partikel, welche im Inneren das PCM-Material eingekapselt mitführen und dadurch größere Mengen Wärme aufnehmen und abführen können als normale Flüssigkeiten. Auch sind Substanzen denkbar, die beispielsweise aus einem festen oder höherviskosen Zustand in einen niederviskosen Zustand übergehen und dabei Wärme aufnehmen und abführen. Außerhalb der Spuleneinrichtung werden diese Partikel wiederum abgekühlt, so dass diese in einen höherviskosen oder festen Zustand übergehen. Bevorzugt ist vorgesehen, dass die Kühlflüssigkeit einem Zwangsumlauf unterliegt, um eine gute Kühlung zu erzielen.

Des Weiteren ist bevorzugt vorgesehen, dass der Spuleneinrichtung zur Erhöhung der Leistung eine Kühlflüssigkeit zugeführt wird, welche elektrisch hochgradig leitend ist. Dadurch kann die magnetische Kraft des oder der Elektromagneten durch zusätzliche Stromstärken vergrößert werden.

Die der Erfindung zugrunde liegende Aufgabe wird des Weiteren durch ein Verfahren zur Steuerung des elektromechanischen Antriebs nach einem oder mehreren der vorherigen Merkmale dadurch gelöst, dass zuerst die erste Antriebseinrichtung angesteuert wird, um eine erste Stellbewegung auf das Antriebselement einzuleiten, wobei das Antriebselement in die Spuleneinrichtung der ersten Antriebseinheit gezogen wird und zeitlich versetzt die zumindest eine weitere Antriebseinrichtung bestromt wird, wodurch das Antriebselement in seiner Stellbewegung zusätzlich beschleunigt oder mit einer zusätzlichen Stellkraft bewegt wird. Durch dieses Verfahren wird ermöglicht, dass insbesondere eine anwachsende Beschleunigung oder ein anwachsender Widerstand bewältigt werden kann, um die gewünschte Stellbewegung zu erzielen. Insbesondere kann durch dieses Verfahren zur Steuerung des elektromechanischen Antriebs ein verschleißarmer und querkräftefreier Startvorgang eines Freikolben-Verbrennungsmotors erzielt werden. Gleichzeitig ist hierfür keine aufwändige Startmechanik erforderlich. In Abhängigkeit der zu erzeugenden Beschleunigung, der zu erzeugenden Stellkraft und/oder des zu durchlaufenden Stellweges können zwei oder mehrere Stufen bzw. zwei oder mehrere Antriebseinrichtungen einander zugeordnet werden, die gleichzeitig oder nacheinander angesteuert werden, um die gewünschte Stellbewegung auf das Antriebselement zu erzeugen.

Eine bevorzugte Ausgestaltung des Verfahrens sieht vor, dass jede Antriebseinrichtung in Abhängigkeit der Stellung und/oder Geschwindigkeit des Antriebselementes vor Erreichen einer Endposition rechtzeitig abgeschalten wird. Dadurch könnte ein gezieltes Abbremsen der Antriebselemente in der Endphase der Stellbewegung erzeugt werden.

Des Weiteren ist bevorzugt vorgesehen, dass die zumindest eine Antriebseinrichtung kurzzeitig mit einer Überlast betrieben werden. Der kurzzeitige Betrieb mit einer elektrischen Überlast der ersten Antriebseinrichtung ermöglicht insbesondere beim Einsatz von Freikolben-Verbrennungsmotoren, dass die Startgeschwindigkeit des oder der Freikolben sichergestellt wird. Vorzugsweise wird eine weitere Antriebseinrichtung kurzzeitig mit einer Überlast betrieben. Die Steuerung der Überlast der zweiten oder weiteren Antriebseinrichtung weist beim Einsatz in Freikolben-Verbrennungsmotoren den Vorteil auf, dass eine hinreichende Kompression der Verbrennungsluft in der Verbrennungskammer sichergestellt wird, um die Kraftstoffzündbedingung zu erzielen.

Des Weiteren ist bevorzugt vorgesehen, dass zumindest ein Antriebselement als Hubstange eines Verbrennungsmotors eingesetzt ist und die magnetisch leitenden Materialien magnetisch aktiviert (Magnetfelddurchflossen) sind. Während des Betriebs des Verbrennungsmotors wird somit elektrische Energie erzeugt. Dadurch kann der elektromechanische Antrieb als Generator eingesetzt werden. Darüber hinaus kann die Energieentnahme durch eine Steuerung geregelt werden.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine schematische Schnittdarstellung eines elektro- mechanischen Antriebs an einem Freikolben- Verbrennungsmotor,
- Figur 2: eine schematisch vergrößerte Ansicht des Antriebs- elementes des elektromechanischen Antriebs gemäß Figur 1,
- Figur 3: eine schematische Detailansicht des Antriebselemen- tes gemäß Figur 1,
- Figur 4: eine schematisch vergrößerte Ansicht aller gekühlter Spuleneinrichtungen des elektromechanischen An- triebs gemäß Figur 1 und
- Figur 5: eine perspektivische Ansicht einer Aktuatorplatte mit seinen symmetrisch angeordneten Gegenmag- netfeldern (hier mit Permanentmagneten).

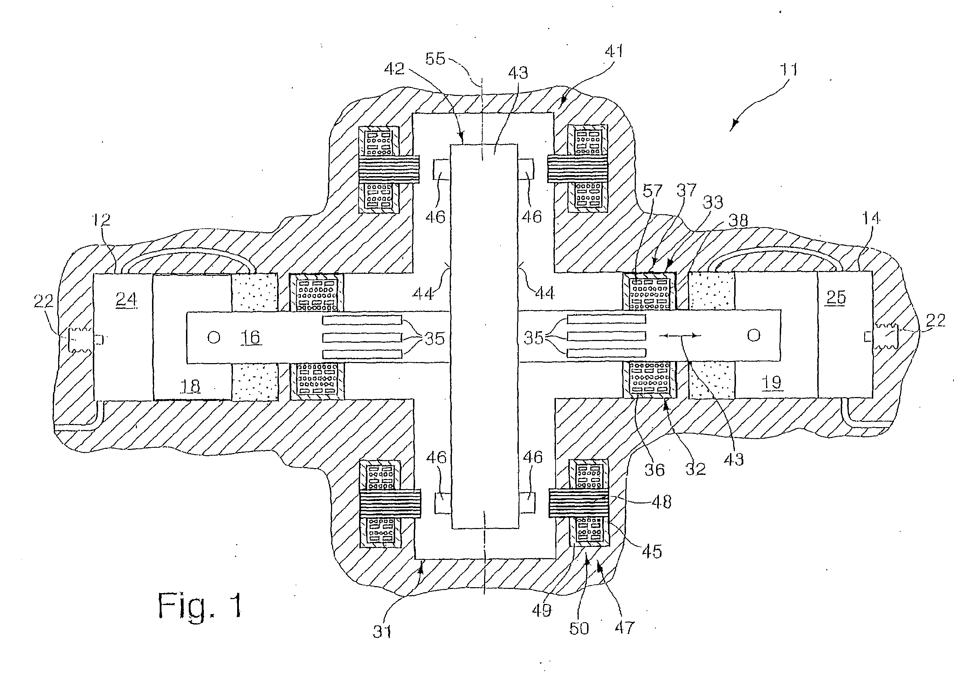

In Figur 1 ist eine schematische Schnittdarstellung eines Freikolben-Verbrennungsmotors 11 dargestellt. Diese weist einen ersten Zylinder 12 und einen zweiten Zylinder 14 auf, die miteinander axial fluchten. In den Zylindern 12, 14 ist ein Kolbenpaar mit einem ersten Kolben 18 und einem zweiten Kolben 19 angeordnet, die durch ein Antriebselement 16, insbesondere eine Hub oder Schubstange, miteinander gekoppelt sind. Dadurch bewegen sich die Kolben 18, 19 synchron, jedoch in entgegengesetzter Richtung innerhalb der jeweiligen Zylinder 12, 14. Dem jeweiligen Zylinder 12, 14 ist eine Zündkerze 22 zugeordnet, die in den Kolbenraum 24, 25 ragt. Die grundsätzliche Arbeitsweise eines solchen Freikolben-Verbrennungsmotors 11 ist aus dem eingangs genannten Stand der Technik bekannt.

Der in Figur 1 dargestellte Freikolbenmotor 11 kann als zweistufiger Motor ausgebildet sein, d. h., dass nur die beiden miteinander gekoppelten Kolben 18, 19 vorgesehen sind. Alternativ kann jedoch vorgesehen sein, dass zwei oder mehrere Kolbenpaare zur Bildung eines Freikolben-Verbrennungsmotors 11 parallel nebeneinander geschaltet werden können.

Dieser Freikolben-Verbrennungsmotor 11 weist einen elektromechanischen Antrieb 31 auf, der beispielsweise als Starter für den Freikolben-Verbrennungsmotor 11 vorgesehen und angepasst ist. Dieser Antrieb 31 kann jedoch auch unabhängig von dem dargestellten Anwendungsbeispiel für eine Vielzahl von Anwendungen vorgesehen sein, um eine gezielte Stellbewegung eines Antriebselementes zu erzielen. So ist z. B. leicht erkennbar, dass die in Fig. 1 skizzierte Anordnung als elektromagnetisch angetriebener Gegentaktkompressor mit einem relativ konstantem Luftstrom einsetzbar ist. Man ersetzt lediglich die Zündkerze 22 durch ein Einwegventil, welches die Druckluft in geeignete Vorrichtungen abführt.

Der elektromechanische Antrieb 31 weist eine erste Antriebseinrichtung 32 auf, welche das Antriebselement 16 als Hub- oder Schubstange sowie zumindest eine Spuleneinrichtung 33 umfasst, die dem Antriebselement 16 unmittelbar zugeordnet ist. Die Spuleneinrichtung 33 kann an einem Gehäuseabschnitt, einer Halterung, einer Aufnahme oder dergleichen befestigt sein. Das Antriebselement 16 ist bevorzugt aus nicht magnetischem Material ausgebildet. In das Antriebselement 16 sind mehrere, vorzugsweise gleichmäßig über den Umfang verteilt angeordnete magnetisch leitende Einsätze 35 eingesetzt. Die Spuleneinrichtung 33 umfasst ein Spulengehäuse 36, in dem ein oder mehrere Elektromagnete 37 mit einer oder mehreren Leitungen 38 angeordnet sind. Durch die Bestromung der Elektromagnete 37 kann ein magnetisches Feld induziert werden, durch welches die Einsätze 35 in das Spulengehäuse 36 gezogen werden. Dadurch wird eine Stellbewegung mit einer bestimmten Stellkraft erzeugt, wodurch das Antriebselement 16 den Kolben 18, 19 innerhalb den Zylindern 12, 14 bezüglich deren jeweiligen Endlagen entlang einer Symmetrie- und Bewegungsachse 13 bewegt.

Der elektromechanische Antrieb 31 weist des Weiteren eine zweite Antriebseinrichtung 41 auf, welche ein Stellglied 42 umfasst. Im Ausführungsbeispiel weist dieses Stellglied 42 vorzugsweise einen scheibenförmigen Grundkörper 43 auf und ist starr mit dem Antriebselement 16 verbunden. Dieses scheibenförmige Stellglied 42 weist am Außenumfang an jeweils seiner Ringfläche 44 Permanentmagnete 46 auf, die über den Umfang der Ringfläche 44 symmetrisch verteilt vorgesehen sind. Den Permanentmagneten 46 gegenüberliegend ist jeweils ein magnetischer Aktuator 47 vorgesehen. Dieser umfasst einen magnetisch leitenden Kern 48 und ein den Kern 48 umgebendes Elektromagnetgehäuse 49, in dem eine Spuleneinrichtung 50 vorgesehen ist. Die Spuleneinrichtung 33 der ersten Antriebseinrichtung 32 und die zumindest eine Spuleneinrichtung 50 der zweiten oder weiteren Antriebseinrichtung 41 werden gemeinsam durch eine Steuereinrichtung 51 angesteuert. Diese Steuereinrichtung 51 ist auch Teil der Steuerung des Freikolben-Verbrennungsmotors 11 oder geht mit dieser Steuerung des Freikolben-Verbrennungsmotors 11 in Datenaustausch. Weiterhin wird die elektrische Energieabgabe so gesteuert, dass der Freikolben-Verbrennungsmotors 11 im optimalen Bereich durchlaufen kann. Dabei ist vorgesehen, dass das Antriebselement 16 als Hubstange für einen Freikolbenmotor 11 eingesetzt und während dem Betrieb des Freikolbenmotors 11 durch zumindest eine Antriebseinrichtung 32, 41 eine elektrische Energie erzeugt wird, deren Abnahme geregelt wird, indem eine Steuereinrichtung 51 auf die Steuerung der Motorparameter Einfluss und/oder den Zustand dieser als Eingangsgröße nimmt.

Die erste und zweite oder weitere Antriebseinrichtungen 32, 41 sind im Ausführungsbeispiel gemäß Figur 1 jeweils doppelt vorgesehen. Dies beruht darauf, dass der Kolben 12 eine Kolbenbewegung zur Verdichtung der Verbrennungsluft in eine entgegengesetzte Richtung durchführt als der Kolben 19 im Zylinder 14. Somit ist quasi ein bildlicher Aufbau zu einer sich durch das Steilglied 42 erstreckenden Spiegelachse 55 gegeben. Dies ist eine spezielle Ausführungsform für solche Freikolben-Verbrennungsmotoren 11. Sofern auch eine Presse oder dergleichen angetrieben wird, kann eine erste und eine zweite Antriebseinrichtung 32, 41 vorgesehen sein, wie dies beispielsweise auf einer Hälfte der spiegelsymmetrischen Anordnung des Freikolben-Verbrennungsmotors 11 vorgesehen ist. Die Steuerungseinrichtung 51 steuert bei der Ausführungsform gemäß Figur 1 selbstverständlich auch die spiegelbildlich angeordneten Antriebseinrichtungen 32' und 41' an.

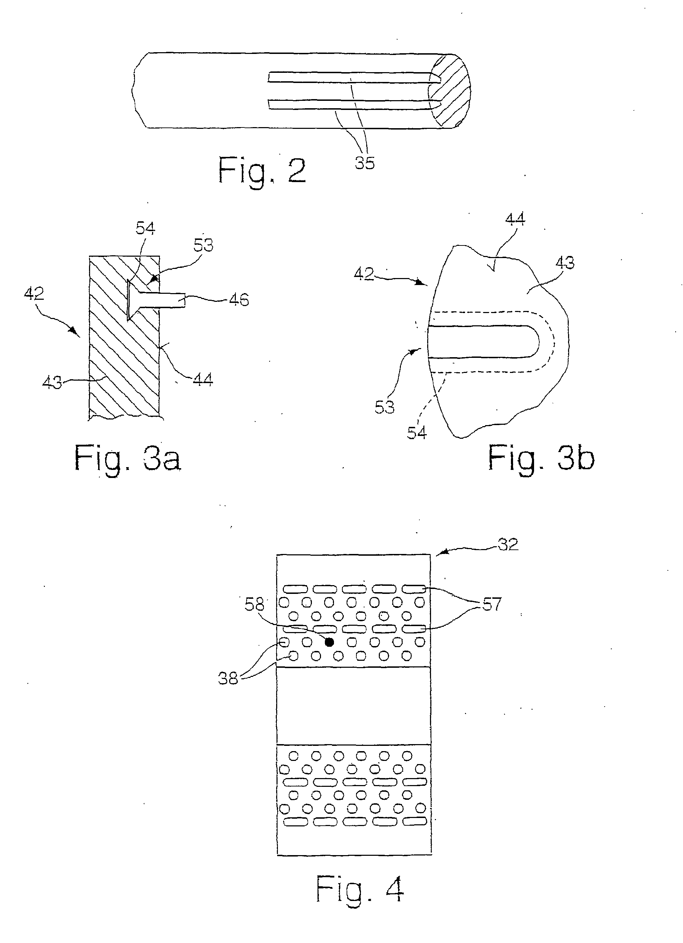

In Figur 2 ist schematisch vergrößert ein Ausschnitt des Antriebselements 16 dargestellt. Über den Umfang verteilt sind gleichmäßig magnetisch anziehbare Einsätze 35 vorgesehen. Der Grundkörper des Antriebselementes 16 besteht beispielsweise aus Keramik oder anderen nicht magnetischen Materialien. In diesen Grundkörper sind zum Außenumfang hin offene Vertiefungen vorgesehen, welche Hinterschneidungen aufweisen können.

In den Figuren 3a und 3b ist schematisch vergrößert eine Ausführungsform zum Einbau der Permanentmagneten 46 ins Stellglied 42 dargestellt. In den Grundkörper des Stellgliedes 42 sind zum Außenumfang hin offene Vertiefungen 53 vorgesehen, welche Hinterschneidungen 54 aufweisen. Diese Hinterschneidungen 54 können beispielsweise eine Schwalbenschwanzform oder eine T-Nutform aufweisen. Darin werden vorzugsweise permanentmagnetische Einsätze 46 formschlüssig eingesetzt und positioniert. Diese können zusätzlich noch verankert oder verklebt werden, da sie stark auf Zug beansprucht werden.

In Figur 4 ist schematisch vergrößert die Spuleneinrichtung 33 der ersten Antriebseinrichtung 32 dargestellt. Diese Spuleneinrichtung 33 umfasst zusätzlich zu Leitungen 38 zur Bildung des oder der Elektromagnete 37 Kühlschläuche 57, die in der Spuleneinrichtung 33 integriert sind. Diese Kühlschlangen 57 dienen zur Kühlung der Spuleneinrichtung 33 während dem Betrieb der ersten Antriebseinrichtung 32.

Gemäß einer ersten Ausführungsform kann vorgesehen sein, dass eine erste Lage von Leitungen 38 vorgesehen ist. Auf einer ersten Lage von Leitungen 38 kann eine zweite Lage von Kühlschläuchen 57 vorgesehen sein. Anschließend folgt beispielsweise eine dritte und vierte Lagen von Leitungen 38 und eine fünfte Lage von Kühlschläuchen 57. Die Anzahl der Lagen von Leitungen 38 und Kühlschläuchen 57 kann anwendungsbedingt verändert werden. Eine besondere Ausführungsform sieht noch vor, dass die Kühlschläuche 57 bevorzugt metallisch ausgebildet sind und während einer Startphase zusätzlich noch bestromt werden, um die Anfangskraft zu erhöhen. Alternativ kann auch vorgesehen sein, dass eine beliebige Vermischung aus Leitungen 38 und Kühlschläuchen 57 vorgesehen ist. Zwischen den einzelnen Lagen sind zumindest ein oder mehrere Temperaturfühler 58 vorgesehen, um die Temperatur der Spuleneinrichtung 33 zu erfassen.

Eine alternative Ausführungsform der Spuleneinrichtung 33 sieht vor, dass eine oder mehrere Leitungen 38 durch ein elastisches Material bzw. ein Kunststoffmaterial umhüllt werden. Das Spulengehäuse 36 ist flüssigkeitsdicht ausgebildet und weist zwei Anschlüsse auf. Über den einen Anschluss erfolgt die Zuleitung von Kühlflüssigkeit und über den anderen Anschluss wird die Kühlflüssigkeit abgeführt. Bei dieser Ausführungsform wird der gesamte Spulenkörper 36 mit Kühlflüssigkeit durchspült, um eine Kühlung der Spuleneinrichtung 33 zu erzielen. Alternativ kann auch die Leitung 38 mit einem Kunststoffmaterial umhüllt und mit Kühlflüssigkeit gefüllt werden.

In beiden vorgenannten alternativen Ausführungsformen kann vorgesehen sein, dass die Kühlflüssigkeit Partikel aus phase change material umfassen. Ebenso kann die Kühlflüssigkeit elektrisch leitend, insbesondere elektrisch hochgradig leitend, sein.

Die in Figur 4 beschriebenen Ausführungsformen und Varianten der Spuleneinrichtung 33 gelten auch für die Ausgestaltung des Elektromagneten 49 des magnetischen Aktuators 47 der zweiten bzw. weiteren Antriebseinrichtung 41.

Diese Kühlschlangen 57 dienen überwiegend zur Kühlung der Spuleneinrichtung 33, 50 während dem Generatorbetrieb.

Der Betrieb des elektromechanischen Antriebs 31 wird beispielsweise in der Anwendung als Starter für den Freikolben-Verbrennungsmotor 11 erörtert.

Zunächst würde über die Steuereinrichtung 51 die erste Antriebseinrichtung 31 angesteuert, indem die Spuleneinrichtung 33 mit Gleich- oder Wechselstrom bestromt wird. Dadurch erfolgt eine magnetinduzierte Stellbewegung auf das Antriebselement 16. Nachdem eine erste Antriebsbewegung erfolgt ist und einer der Kolben 18, 19 in Richtung einer oberen Todpunktlage zur Kompression der Verbrennungsluft übergeführt wird, erfolgt die Ansteuerung der zweiten Antriebseinrichtung 41. Durch die Bestromung des oder der elektromagnetischen Aktuatoren 47 erfolgt eine zusätzliche Stellbewegung in dieselbe Bewegungsrichtung, wie durch die Antriebseinrichtung 32 erzeugt wird. Dementsprechend wird durch die Steuereinrichtung 51 auch die zugehörigen Spuleneinrichtung 33 bzw. magnetische Aktuatoren 47 der ersten und zweiten Antriebseinrichtungen 32, 41 angesteuert. Bevor die Zuschaltung der weiteren Antriebseinrichtung 41 erfolgt, wird die erste Antriebseinrichtung 32 kurzzeitig mit elektrischer Überlast betrieben. Anschließend erfolgt die Zuschaltung der zweiten Antriebseinrichtung 41. Aufgrund des zunehmenden Widerstandes bei der Komprimierung der Verbrennungsluft wird die zweite Antriebseinrichtung 41 mit elektrischer Überlast kurzzeitig betrieben, um die Kompression der Verbrennungsluft sicherzustellen. Unmittelbar vor dem Zündzeitpunkt wird die Antriebsspannung der Antriebseinrichtung 32, 42 ausgeschaltet. Anschließend erfolgt die Zündung und die Antriebsbewegung kehrt sich aufgrund des ersten Zündvorganges um.

Während des Betriebs des Freikolben-Verbrennungsmotors 11 kann zumindest an der Antriebseinrichtung 32 aufgrund der Hin- und Herbewegung des Antriebselementes 16 durch die Explosionskraft des Verbrennungsgemisches im Kolben 12, 14 über die Spuleneinrichtung 33 und/oder 50 Strom erzeugt und abgegriffen werden. Damit während eines solchen Dauerbetriebes thermisch stabile Verhältnisse bestehen, wird die Spuleneinrichtung 33 und/oder 50 gekühlt.

Sofern zum Starten eines solchen Freikolben-Verbrennungsmotors 11 größere Kräfte erforderlich sind, die durch eine erste und zweite Antriebseinrichtung 32, 41 nicht aufgebracht werden können, kann auch eine dritte oder vierte oder weitere Antriebseinrichtungen vorgesehen sein, so dass diese zeitgleich oder nacheinander zugeschaltet werden, um die erforderliche Stellbewegung und Stellkraft zu erzeugen. Durch einen solchen elektromechanischen Antrieb 31 wird eine verschleißfreie Startmechanik geschaffen, die einen einfachen konstruktiven Aufbau aufweist. Zudem kann auf eine gesonderte Zündspule verzichtet werden.

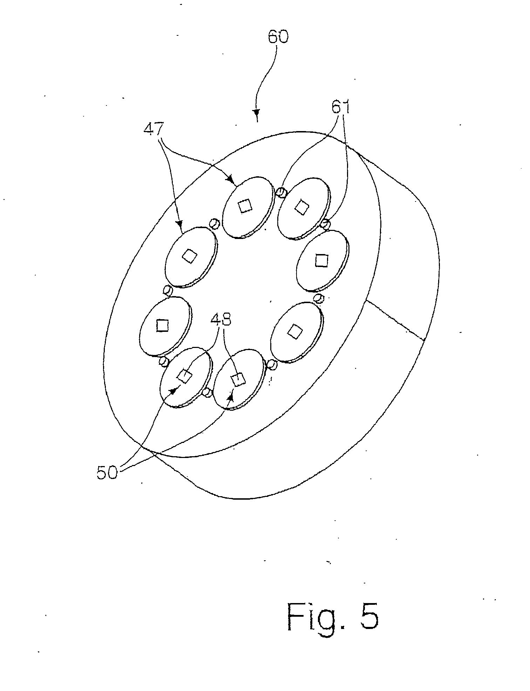

Die Figur 5 zeigt eine perspektivische Darstellung einer vorteilhaften Ausführungsform des Aktuators 47 mit einer fest im Gehäuse verankerten Aktuatorplatte 60. Den in der Aktuatorplatte 60 eingepassten und fixierten Spuleneinrichtungen 50 sind hier beispielsweise gleich viele Permanentmagnete 61 derart beigeordnet, dass sie jeweils symmetrisch zwischen den Spuleneinrichtungen 50 fest in der Aktuatorplatte 60 eingepasst und fixiert sind. Diese Permanentmagnete 61 erzeugen ein Magnetfeld, das dem sich bewegenden Magnetfeld der Permanentmagnete 46 entgegengesetzt ist. Diese Ausführungsform des Aktuators 47 ist für den Generatorbetrieb äußerst vorteilhaft, da die freie Rotation der Antriebseinrichtungen 32 und 41 sowie der Kolben 18, 19 um die Achse 13 keinerlei Effektivitätsbeeinflussung des im Generatorbetrieb arbeitenden magnetischen Aktuators 47 bedeutet. Weiterhin erfolgt durch die magnetische Umpolung des Kernes 48, die jeweils bei Annäherung und Entfernung des im Grundkörper 43 fixierten Permanentmagneten 46 stattfindet, eine stärkere elektrische Induktion als ohne dieses Gegenmagnetfeld.

Selbstverständlich ist die Aktuatorplatte 60 fest mit dem feststehenden Gehäuse derart verbunden, dass die Bewegungsachsen der jeweiligen Permanentmagnete 46 mit den Mittelpunkten der Spuleneinrichtungen 50 fluchten. Das bedeutet für die in Figur 5 dargestellte Ausführungsform, dass die Spuleneinrichtungen 50 und die Permanentmagnete 46 und 61 alle auf demselben Kreisbogen (jeweils in Bewegungsrichtung parallel verschoben) befestigt sind.

## Patentansprüche

1. Elektromechanischer Antrieb zum Erzeugen einer translatorischen Bewegung für ein Antriebselement (16), wobei die translatorische Bewegung durch eine magnetinduzierte Stellkraft erzeugt wird, **dadurch gekennzeichnet, dass** eine erste Antriebseinrichtung (32) vorgesehen ist, welche eine Spuleneinrichtung (33) aufweist, die auf das Antriebselement (16) die Stellkraft erzeugt, wobei das Antriebselement (16) mit einem oder mehreren magnetisch anziehbaren Einsätzen (35) versehen ist und dass zumindest eine zweite Antriebseinrichtung (41) vorgesehen ist, die getrennt zur ersten Antriebseinrichtung (32) angeordnet ist und ein Stellglied (42) aufweist, welches mit dem Antriebselement (16) starr gekoppelt ist, wobei das Stellglied (42) ein oder mehrere Permanentmagnete aufweist, welche auf das Stellglied (42) durch ein oder mehrere magnetische Aktuatoren (47) eine weitere Stellkraft bewirken, wobei die zumindest eine weitere Antriebseinrichtung (41) zeitlich nach der ersten Antriebseinrichtung (32) aktivierbar ist.

2. Elektromechanischer Antrieb nach Anspruch 1, **dadurch gekennzeichnet, dass** das Antriebselement (16) der ersten Antriebseinrichtung (32) aus einem nicht magnetischen Material, insbesondere Keramik, hergestellt ist und zumindest einen magnetisch anziehbaren Einsatz (35) umfasst, wobei vorzugsweise mehrere über den Umfang des Antriebselementes (16) verteilt angeordnete magnetisch anziehbare Einsätze (35) vorgesehen sind, die insbesondere elektrisch und magnetisch voneinander getrennt sind und bevorzugt formschlüssig im Antriebselement (16) positioniert sind.

3. Elektromechanischer Antrieb nach einem der vorhergehenden Ansprüche, **dadurch gekennzeichnet, dass** das Antriebselement (16) mittels mindestens einem magnetisch anziehbaren Einsatz im Bereich der Spuleneinrichtung (33) magnetisch aktiviert ist.

4. Elektromechanischer Antrieb nach Anspruch 1 und 2, **dadurch gekennzeichnet, dass** das Antriebselement (16) der ersten Antriebseinrichtung (32) eine Hubstange zwischen zwei Kolben (18, 19) eines Freikolben-Verbrennungsmotors (11) ist und ein bis alle Spuleneinrichtungen (33, 50) einer bis aller Antriebseinrichtungen (32, 41) zur Erzeugung elektrischer Energie im Dauerbetrieb vorgesehen ist.

5. Elektromechanischer Antrieb nach einem der vorhergehenden Ansprüche, **dadurch gekennzeichnet, dass** ein oder mehrere Stellglieder (42) symmetrisch zur mittig liegenden Bewegungs- und Symmetrieachse (13) des Antriebselementes (16) positioniert sind, wobei an beiden in Bewegungsrichtung weisenden Oberflächen (44) des Grundkörpers (43) ein oder mehrere verteilt angeordnete Permanentmagnete (46), die vorzugsweise in Hinterschneidungen (54) im Stellglied (42) positioniert sind, vorgesehen sind, auf deren Bewegungsachse im feststehenden Gehäuse gegenüberliegend zumindest ein magnetischer Aktuator (47) vorgesehen ist.

6. Elektromechanischer Antrieb nach einem der vorhergehenden Ansprüche, **dadurch gekennzeichnet, dass** das Stellglied (42) in einem Gehäuseabschnitt verdrehgesichert geführt ist.

7. Elektromechanischer Antrieb nach Anspruch 1, **dadurch gekennzeichnet, dass** der magnetische Aktuator (47) aus einem magnetisch leitenden Kern (48) und einer Spuleneinrichtung (50) ausgebildet ist in deren Nachbarschaft ein zu den Permanentmagneten (46) magnetisch gegengepoltes Magnetfeld, insbesondere durch Permanentmagnete erzeugt, positioniert ist.

8. Elektromechanischer Antrieb nach einem der vorhergehenden Ansprüche, **dadurch gekennzeichnet, dass** die Spuleneinrichtung (33, 50) aus einem oder mehreren Elektromagneten (37, 47) besteht und eine oder mehrere Leitungen (38, 45) von dem Elektromagneten (37, 47) mit einem elastischen, nicht leitenden Material, das mit Kühlflüssigkeit gefüllt ist, umhüllt sind und dass vorzugsweise die Leitungen (38, 45) in einem Spulengehäuse (36,49) angeordnet sind, welches mit einer Kühlflüssigkeit beaufschlagbar ist und das Spulengehäuse (36, 49) durchströmt.

9. Elektromechanischer Antrieb nach einem der vorhergehenden Ansprüche, **dadurch gekennzeichnet, dass** die Spuleneinrichtung (33, 50) aus einem oder mehreren Elektromagneten (37, 47) mit einer oder mehreren Leitungen (38, 45) besteht und dass zwischen einzelnen Leitungen (38, 45) oder Lagen von Leitungen (38, 45) Kühlschläuche (57) oder Kühlelemente vorgesehen sind, wobei vorzugsweise nach je zwei Lagen Leitungen (38, 45) eine Lage aus Kühlschläuchen (57) vorgesehen ist.

10. Elektromechanischer Antrieb nach Anspruch 8 oder 9, **dadurch gekennzeichnet, dass** zur Kühlung der Spuleneinrichtung (33, 50) eine Kühlflüssigkeit mit beigemengten Partikeln aus gekapselten Phase-Change-Material vorgesehen ist, die Kühlflüssigkeit selbst elektrisch hochgradig leitend ist und einem Zwangsumlauf unterliegt (Kühlkreislauf).

11. Elektromechanischer Antrieb nach einem der Ansprüche 7 bis 9, **dadurch gekennzeichnet, dass** die der Spuleneinrichtung (33, 50) zugeführte Kühlflüssigkeit elektrisch leitend ist.

12. Verfahren zur Steuerung eines elektromechanischen Antriebs (31) gemäß einem der Ansprüche 1 bis 11, **dadurch gekennzeichnet, dass** eine erste Antriebseinrichtung (32) bestromt wird, so dass eine erste Stellbewegung eines Antriebselementes (16) der ersten Antriebseinheit (32) eingeleitet wird, bei der das Antriebselement (16) in eine Spuleneinrichtung (33) der ersten Antriebseinrichtung (32) gezogen wird und dass zeitlich versetzt zumindest eine weitere Antriebseinrichtung (41) bestromt wird, wodurch das Antriebselement (16) in seiner Stellbewegung zusätzlich durch ein mit dem Antriebselement (16) gekoppeltes Stellglied (42) der weiteren Antriebseinrichtung (41) zusätzlich beschleunigt und/oder mit einer zusätzlichen Stellkraft bewegt wird.

13. Verfahren nach Anspruch 12, **dadurch gekennzeichnet, dass** jede Antriebseinrichtung (32, 41) in Abhängigkeit der Stellung und/oder des Geschwindigkeitsgradienten des Antriebselementes (16) vor Erreichen einer Hubendposition rechtzeitig abgeschaltet wird.

14. Verfahren nach Anspruch 12 oder 13, **dadurch gekennzeichnet, dass** die erste Antriebseinrichtung (32) kurzzeitig mit einer Überlast betrieben wird und vorzugsweise die zumindest eine weitere Antriebseinrichtung (41) kurzzeitig mit einer Überlast betrieben wird.

15. Verfahren nach einem der Ansprüche 12 bis 14, **dadurch gekennzeichnet, dass** das Antriebselement (16) als Hubstange für einen Freikolben-Verbrennungsmotor (11) eingesetzt wird und während dem Betrieb des Freikolben-Verbrennungsmotors (11) durch die zumindest eine Antriebseinrichtung (32, 41) eine elektrische Energie erzeugt wird, deren Abnahme geregelt wird, indem eine Steuereinrichtung (51) auf die Steuerung der Motorparameter Einfluss nimmt und/oder den Zustand dieser als Eingangsgröße nimmt.
